# EUROPEAN PATENT SPECIFICATION

(11) **EP 3 771 544 B1**
(45) Date of publication and mention of the grant of the patent: **24.08.2022**
(21) Application number: 20182835.7
(22) Date of filing: 29.06.2020
(51) Int. Cl.: B29C 45/16, B29D 25/00

(54) **METHOD FOR INJECTION MOULDING A VEHICLE MUDGUARD AND RELATED VEHICLE MUDGUARD**
VERFAHREN ZUM SPRITZGIESSEN EINES FAHRZEUGKOTFLÜGELS UND ENTSPRECHENDER FAHRZEUGKOTFLÜGEL
PROCÉDÉ DE MOULAGE PAR INJECTION D'UN GARDE-BOUE DE VÉHICULE ET GARDE-BOUE DE VÉHICULE ASSOCIÉ

(30) Priority: 02.08.2019 IT 201900013848
(43) Date of publication of application: 03.02.2021
(73) Proprietor: DOMAR S.p.A., 70022 Altamura, Bari (IT)
(72) Inventor: LORUSSO, Debora, 70022 Altamura, BARI (IT)
(74) Representative: Mitola, Marco

(56) References cited:
- EP-A2- 0 449 666
- DE-A1-102018 128 958

## Description

### FIELD OF APPLICATION

The present invention relates to a method for moulding a mudguard for vehicles, in particular for industrial vehicles, and to a related vehicle mudguard.

### BACKGROUND ART

It is known that, in the transport field, mudguards with highly reflective and/or refractive edges are used, which make the shape thereof particularly visible, even under poor visibility conditions.

Furthermore, such edges also have a decorative pattern that improves the appearance of the mudguard component itself.

In order to obtain said edges with a highly reflective and/or refractive capacity, it is known to glue reflective strips of various colours (e.g. yellow, white or orange) along the outer edge of the wheel guards to make the outline more visible, especially in conditions of reduced visibility, such as fog, rain and the like.

Alternatively, it is also known to paint the edges of mudguards with high-visibility colours.

The aforesaid solutions are not free from drawbacks and limitations.

Indeed, the glued strips tend to come unstuck over time due to water, mud, pebbles raised by the turning wheels, high-pressure water jets during washing and atmospheric elements in general. Similarly, the paint tends to deteriorate, losing its reflective/reflective properties and tends to detach from the body of the mudguard.

It is also known to obtain the edge with reflective/refractive capacity through a co-moulding with the body of the mudguard (typically black).

However, the problem of this solution is of aesthetic and/or structural nature; indeed, a mudguard for industrial use has a very wide arched-shaped rim shape, with a radius that can reach 700 mm and a reduced thickness. These geometrical features mean that, as a result of co-moulding, the mudguard may display significant distortions, which are completely unacceptable from both a structural and visual point of view.

Furthermore, even when the dimensions of the component are precisely controlled, the injection point is often visible on the finished part, both in terms of injection points and in terms of moulding streaks or striations. While from a structural point of view these streaks are not a problem, from a visual point of view they represent imperfections that are often unacceptable for the customer/end-user. Indeed, in industrial vehicles the mudguard is a visible component often not integrated (or not highly integrated) in the rest of the chassis; therefore, imperfections are easily visible from the outside. Solutions according prior art are disclosed, for example, by EP 0449666 A2 and DE 102018128958 A1.

### INVENTION OVERVIEW

The need is therefore felt to solve the drawbacks and limitations mentioned above with reference to the prior art.

In other words, the need is felt to provide a mudguard for industrial vehicles equipped with an edge with a high reflective and/or refractive capacity that maintains its reflective/refractive capacity unchanged over time and that does not come unstuck and/or deteriorate due to wear and/or atmospheric elements during the working life of the component.

Furthermore, the need is felt to provide a mudguard which is impeccable in terms of appearance and size but also of absence of unevenness, streaks, or similar defects.

Such a need is met by a method of injection moulding a vehicle mudguard according to claim 1.

### DESCRIPTION OF THE DRAWINGS

Further features and advantages of the present invention will become more comprehensible from the following description of preferred embodiments thereof given by way of non-limiting examples, in which:

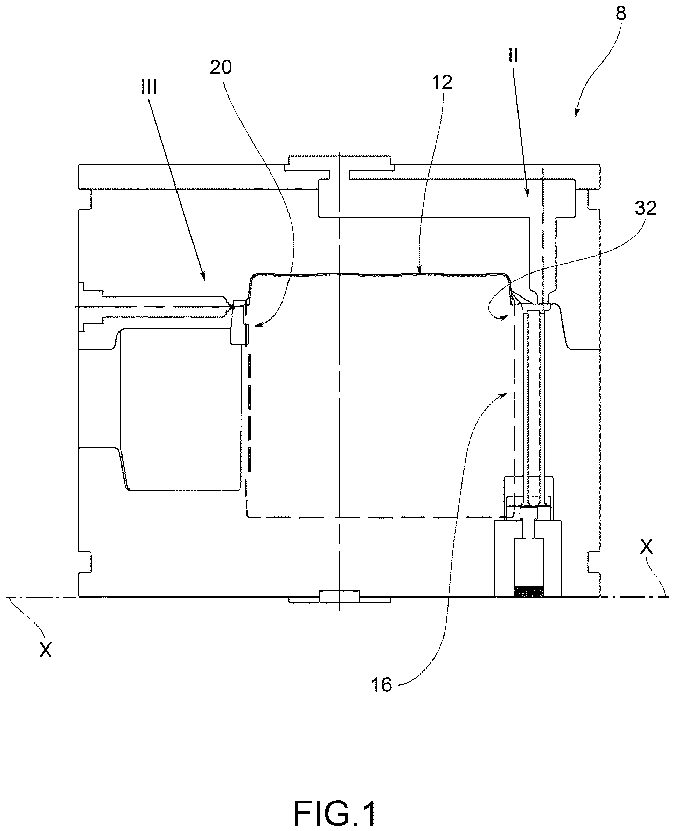

- figure 1 shows a section view of an injection mould for a mudguard according to the present invention;

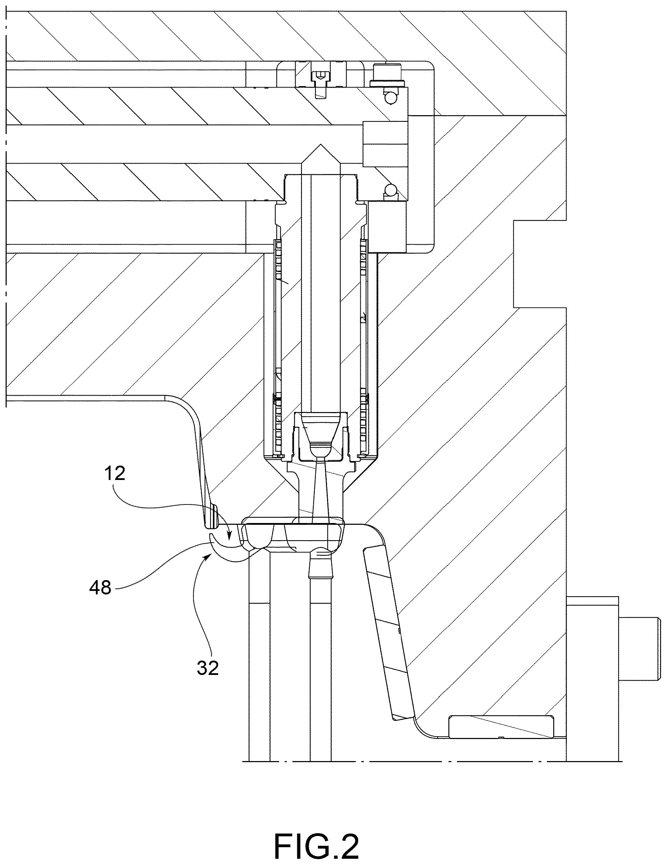

- figure 2 is an enlarged view of detail II in figure 1;

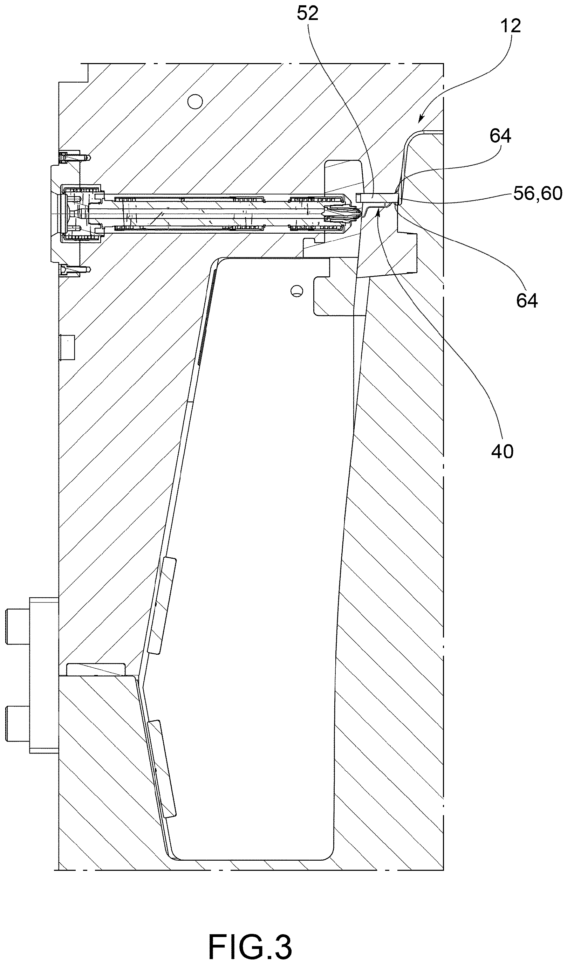

- figure 3 is an enlarged view of detail III in figure 1;

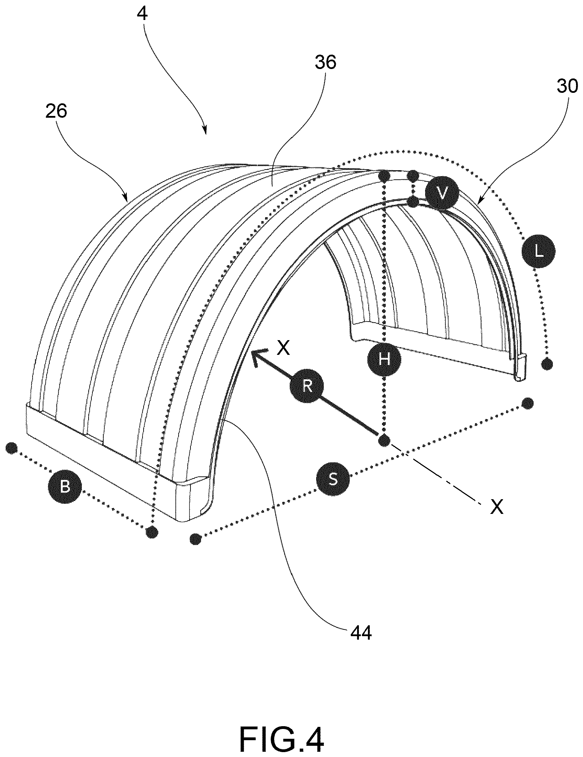

- figure 4 is a perspective view of a mudguard according to the present invention.

Elements or parts in common to the embodiments described will be indicated hereafter using the same reference numerals.

### DETAILED DESCRIPTION

With reference to the aforementioned figures, reference numeral 4 diagrammatically indicates a mudguard for vehicles, in particular for commercial vehicles, according to the present invention.

In particular, the mudguard 4 is obtained by injection moulding following a precise sequence of steps, aimed at obtaining a mudguard 4 which can solve all the problems of the prior art described above.

First, a mould 8 must be prepared for the construction of the mudguard 4, wherein said mould 8 delimits an injection chamber 12 substantially shaped as a circular crown about a central axis X-X. In other words, the injection chamber 12 is counter-shaped with respect to the shape of the mudguard 4 which is its negative.

The injection chamber 12 extends from an inner side 16 to an outer side 20, parallel to said central axis X-X.

The inner side 16 of the injection chamber 12 corresponds to the inner edge 26 of the mudguard 4 (intended to be mounted towards the inner side or chassis of the vehicle with which it can be associated so that it is not visible), while the outer side 20 of the injection chamber 12 corresponds to the outer edge 30 of the mudguard 4 (intended to be mounted towards the outside and therefore in a visible manner).

The method further comprises the steps of preparing a first injection site 32 for injecting a main body 36 of the mudguard 4 with a first material and/or a first colour.

Furthermore, the provision of arranging a second injection site 40 is provided for injecting a side edge 44 in a second material and/or a second colour different from the first material and/or first colour of the main body 36.

The side edge 44 will preferably have a colour such as to contrast with the colour of the main body 36.

Advantageously, the first and second injection sites 32,40 are arranged at said opposite inner and outer sides 16,20 of the injection chamber 12, respectively.

Advantageously, the method comprises the step of firstly injecting the main body 36, through the first injection point 32 and then the side edge 44 through the second injection point 40.

Preferably, the step of providing the mould 8 with at least one tap 48, having an arc-shaped configuration, near the first injection point 32, to form a barrier to the initial entry of the first material into the injection chamber 12 is included.

Preferably, during the first step of injecting, the step of positioning a circumferential pin 52 at the outer side 20 of the injection chamber 12 is provided, the pin being adapted to create a perimeter seat 56 on said outer side 20 (and thus on the outer edge 30 of the mudguard 4), adapted to be subsequently filled with the second material for the creation of the side edge 44.

Said circumferential pin 52 is positioned to create a perimeter seat 56 having a "U"-shaped section delimited by a bottom 60 and two wings 64 of the main body 36 on said outer side 20 (and thus on the outer edge 30 of the mudguard 4).

The first step of injecting takes place at a first pressure between 1200-1300 kg/cm2.

Preferably, the time of the first step of injecting is between 7 and 9 seconds.

The moulding method according to the present invention further comprises the step of waiting for a time interval between 5 and 10 seconds between the first and second steps of injecting.

According to a possible embodiment, between the first and second steps of injecting, it is provided to remove the tonnage of the machine acting on the mould 8, so that this circumferential pin 52 can be retracted for the subsequent second step of injecting; in this manner, the movements of the mould 8 are advantageously preserved.

Then, before the second injection, the machine tonnage acting on the mould 8 is restored.

The second step of injecting takes place at a second pressure between 900-1000 kg/cm2.

The time of the second step of injecting is between 2 and 3 seconds.

As can be appreciated from the description above, the present invention allows to overcome the drawbacks presented in the prior art.

Advantageously, the solution of the present invention allows to obtain a mudguard made of plastic material characterized by the inclusion of an external edge or edging which can neither detach nor deteriorate.

Indeed, both the action of external atmospheric elements and the action of abrasion due, e.g. to outer bodies has no harmful effect in terms of refractive/reflective capacity as it merely abrades/removes a surface layer on the edge, at the same time bringing an underlying layer with the same reflective and/or refractive capacities out into the open.

Therefore, despite any abrasion and surface removal of material, the edge maintains the same visibility features over time.

The co-moulded mudguard according to the present invention has a controlled size and no visible streaks or imperfections. In other words, the co-moulding according to the invention allows to obtain a mudguard with precise dimensional tolerances and free of streaks, barring, or similar visible moulding defects.

The positioning of the injection points at opposite axial ends ensures an even distribution of the material and the absence of unsightly streaks due to mould filling.

In particular, by virtue of the side injection, the injected material impacts against the tap of the mould, at least partially defining the moulding chamber, so that it can distribute itself more evenly inside the chamber avoiding the formation of unsightly streaks.

Furthermore, the more homogeneous distribution of the injected material in the moulding chamber further allows more precise control of the geometries and thicknesses of the moulded part, which will also have greater mechanical resistance, as well as more precise respect of the same dimensional tolerances.

The indicated material pressure values allow the best performance in terms of moulding accuracy and interface between the main body and the side edge.

The expected injection times, as well as the waiting time between the first and second steps of injecting, allow the best possible filling of the mould, preventing the material of the second injection from even partially deforming the first moulding.

The result is a mudguard with extremely precise edges, even at the interface between the main body and the side edge.

In order to meet contingent, specific needs, those skilled in the art can make several changes and variants to the solutions described above, all contained within the scope of the invention as defined by the following claims.

## Claims

1. A method for injection moulding of a vehicle mudguard (4) comprising the steps of:
- providing a mould (8) for making a mudguard (4), said mould (8) delimiting an injection chamber (12) having the substantial shape of a circular crown around a central axis (X-X), the injection chamber (12) extending from an inner side (16) to an outer side (20), parallel to said central axis (X-X),
- preparing a first injection site (32) for injection of a main body (36) of the mudguard (4) with a first material and/or a first colour,
- arranging a second injection site (40) for injection of a side edge (44) in a second material and/or a second colour different from the first material and/or first colour of the main body (36),
- wherein the first and second injection sites (32,40) are arranged at said opposite inner and outer sides (16,20) respectively,
- wherein the method comprises the step of first injecting the main body (36) and then the side edge (44) from the respective injection sites (32,40),
**characterized in that**
during the first injection step, the step of positioning, at the outer side (20), at least one circumferential pin (52) suitable for creating a perimeter seat (56) on said outer side (20) suitable to be subsequently filled with the second material to form the side edge (44) is envisaged.

2. The injection moulding method of a vehicle mudguard (4) according to claim 1, wherein the step of providing the mould (8) with at least one tap (48), having an arc configuration, near the first injection point (32), so as to constitute a barrier to the initial entry of the first material into the injection chamber (12) is envisaged.

3. The injection moulding method of a vehicle mudguard (4) according to claim 1 or 2, wherein said circumferential pin (52) is positioned so as to create on said outer side (20) a circumferential seat (56) having a 'U' section delimited by a bottom (60) and two wings (64) of the main body (36).

4. The method of injection moulding a vehicle mudguard (4) according to any one of the preceding claims, wherein the first injection step takes place at a first pressure between 1200-1300 kg/cm2.

5. The method of injection moulding a vehicle mudguard (4) according to any one of the preceding claims, wherein the time of the first injection step is between 7-9 seconds.

6. The method of injection moulding a vehicle mudguard (4) according to any one of the claims from 1 to 5, wherein the method comprises the step of waiting for a time interval of 5 to 10 seconds between the first and second injection steps.

7. The injection moulding method of a vehicle mudguard (4) according to any one of the claims from 1 to 6, wherein between the first and second injection steps the step of removing the tonnage of the press acting on the mould (8) is envisaged.

8. The injection moulding method of a vehicle mudguard (4) according to claim 7, wherein before the second injection, the tonnage of the press is restored.

9. The injection moulding method of a vehicle mudguard (4) according to any one of the preceding claims, wherein the second injection step takes place at a second pressure between 900-1000 kg/cm2.

10. The injection moulding method of a vehicle mudguard (4) according to any one of the preceding claims, wherein the time of the second injection step is between 2-3 seconds.

## Patentansprüche

1. Verfahren zum Spritzgießen eines Fahrzeugkotflügels (4), umfassend die folgenden Schritte:
- Bereitstellen einer Form (8) zum Herstellen eines Kotflügels (4), wobei die Form (8) eine Spritzkammer (12) begrenzt, welche um eine zentrale Achse (X-X) die wesentliche Form einer ringförmigen Krone aufweist, wobei sich die Spritzkammer (12) parallel zu der zentralen Achse (X-X) von einer inneren Seite (16) zu einer äußeren Seite (20) erstreckt,
- Vorbereiten einer ersten Spritzstelle (32) zum Spritzen eines Hauptkörpers (36) des Kotflügels (4) mit einem ersten Material und/oder einer ersten Farbe,
- Anordnen einer zweiten Spritzstelle (40) zum Spritzen eines Seitenrandes (44) aus einem zweiten Material und/oder in einer zweiten Farbe, welches/welche unterschiedlich zu dem ersten Material und/oder zu der ersten Farbe des Hauptkörpers (36) ist,
- wobei die erste und die zweite Spritzstelle (32, 40) an der entgegengesetzten inneren bzw. äußeren Seite (16, 20) angeordnet sind,
- wobei das Verfahren den Schritt umfasst, zuerst den Hauptkörper (36) und danach den Seitenrand (44) von den jeweiligen Spritzstellen (32, 40) zu spritzen,
**dadurch gekennzeichnet, dass** während des ersten Spritzschrittes, der Schritt eines Positionierens, an der äußeren Seite (20) wenigstens ein umlaufender Zapfen (52) vorgesehen ist, welcher dazu geeignet ist, einen Umfangssitz (56) an der äußeren Seite (20) zu erzeugen, welcher dazu geeignet ist, darauffolgend mit dem zweiten Material gefüllt zu werden, um den Seitenrand (44) zu bilden.

2. Spritzgussverfahren eines Fahrzeugkotflügels (4) nach Anspruch 1, wobei der Schritt des Bereitstellens der Form (8) mit wenigstens einem Hahn (48), welcher eine Bogenform aufweist, in der Nähe der ersten Spritzstelle (32) vorgesehen ist, um eine Barriere für den anfänglichen Eintritt des ersten Materials in die Spritzkammer (12) darzustellen.

3. Spritzgussverfahren eines Fahrzeugkotflügels (4) nach Anspruch 1 oder 2, wobei der umlaufende Zapfen (52) derart positioniert ist, dass er an der äußeren Seite (20) einen umlaufenden Sitz (56) erzeugt, welcher einen "U"-Bereich aufweist, welcher durch einen Boden (60) und zwei Flügel (64) des Hauptkörpers (36) begrenzt ist.

4. Spritzgussverfahren eines Fahrzeugkotflügels (4) nach einem der vorhergehenden Ansprüche, wobei der erste Spritzschritt bei einem ersten Druck zwischen 1200-1300 kg/cm² stattfindet.

5. Spritzgussverfahren eines Fahrzeugkotflügels (4) nach einem der vorhergehenden Ansprüche, wobei die Dauer des ersten Spritzschrittes zwischen 7 und 9 Sekunden beträgt.

6. Spritzgussverfahren eines Fahrzeugkotflügels (4) nach einem der Ansprüche 1 bis 5, wobei das Verfahren den Schritt eines Wartens für ein Zeitintervall von 5 bis 10 Sekunden zwischen dem ersten und dem zweiten Spritzschritt umfasst.

7. Spritzgussverfahren eines Fahrzeugkotflügels (4) nach einem der Ansprüche 1 bis 6, wobei zwischen dem ersten und dem zweiten Spritzschritt der Schritt eines Entfernens der Tonnage der Presse vorgesehen ist, welche auf die Form (8) einwirkt.

8. Spritzgussverfahren eines Fahrzeugkotflügels (4) nach Anspruch 7, wobei die Tonnage der Presse vor dem zweiten Spritzen zurückgesetzt wird.

9. Spritzgussverfahren eines Fahrzeugkotflügels (4) nach einem der vorhergehenden Ansprüche, wobei der zweite Spritzschritt bei einem zweiten Druck zwischen 900-1000 kg/cm² stattfindet.

10. Spritzgussverfahren eines Fahrzeugkotflügels (4) nach einem der vorhergehenden Ansprüche, wobei die Dauer des zweiten Spritzschrittes zwischen 2 und 3 Sekunden beträgt.

## Revendications

1. Procédé de moulage par injection d'un garde-boue de véhicule (4) comprenant les étapes suivantes :
- la fourniture d'un moule (8) pour fabriquer un garde-boue (4), ledit moule (8) délimitant une chambre d'injection (12) présentant sensiblement la forme d'une couronne circulaire autour d'un axe central (X-X), la chambre d'injection (12) s'étendant depuis un côté intérieur (16) jusqu'à un côté extérieur (20), parallèlement audit axe central (X-X),
- la préparation d'un premier site d'injection (32) pour une injection d'un corps principal (36) du garde-boue (4) avec un premier matériau et/ou une première couleur,
- l'agencement d'un second site d'injection (40) pour une injection d'un bord latéral (44) avec un second matériau et/ou une seconde couleur qui sont différents du premier matériau et/ou de la première couleur du corps principal (36),
- dans lequel les premier et second sites d'injection (32, 40) sont agencés respectivement auxdits côtés intérieur et extérieur (16, 20) opposés l'un à l'autre,
- dans lequel le procédé comprend l'étape de l'injection d'abord du corps principal (36) puis du bord latéral (44) depuis les sites d'injection (32, 40) respectifs,
**caractérisé en ce que**
au cours de la première étape d'injection, l'étape du positionnement, au bord extérieur (20), d'au moins une broche circonférentielle (52) apte à créer un siège périmétrique (56) sur ledit côté extérieur (20) apte à être rempli ensuite du second matériau pour former le bord latéral (44) est envisagée.

2. Procédé de moulage par injection d'un garde-boue de véhicule (4) selon la revendication 1, dans lequel l'étape de la fourniture du moule (8) avec au moins un robinet (48), présentant une configuration arquée, à proximité du premier point d'injection (32), de manière à constituer une barrière à l'entrée initiale du premier matériau dans la chambre d'injection (12) est envisagée.

3. Procédé de moulage par injection d'un garde-boue de véhicule (4) selon la revendication 1 ou 2, dans lequel ladite broche circonférentielle (52) est positionnée de manière à créer, sur ledit côté extérieur (20), un siège circonférentiel (56) présentant une coupe en U délimitée par un fond (60) et deux ailes (64) du corps principal (36).

4. Procédé de moulage par injection d'un garde-boue de véhicule (4) selon l'une quelconque des revendications précédentes, dans lequel la première étape d'injection se déroule à une première pression entre 1200 et 1300 kg/cm².

5. Procédé de moulage par injection d'un garde-boue de véhicule (4) selon l'une quelconque des revendications précédentes, dans lequel la durée de la première étape d'injection est entre 7 et 9 secondes.

6. Procédé de moulage par injection d'un garde-boue de véhicule (4) selon l'une quelconque des revendications 1 à 5, dans lequel le procédé comprend l'étape de l'attente pendant un intervalle de temps de 5 à 10 secondes entre les première et seconde étapes d'injection.

7. Procédé de moulage par injection d'un garde-boue de véhicule (4) selon l'une quelconque des revendications 1 à 6, dans lequel, entre les première et seconde étapes d'injection, l'étape du retrait du tonnage de la presse agissant sur le moule (8) est envisagée.

8. Procédé de moulage par injection d'un garde-boue de véhicule (4) selon la revendication 7, dans lequel, avant la seconde injection, le tonnage de la presse est rétabli.

9. Procédé de moulage par injection d'un garde-boue de véhicule (4) selon l'une quelconque des revendications précédentes, dans lequel la seconde étape d'injection se déroule à une seconde pression entre 900 et 1000 kg/cm².

10. Procédé de moulage par injection d'un garde-boue de véhicule (4) selon l'une quelconque des revendications précédentes, dans lequel la durée de la seconde étape d'injection est entre 2 et 3 secondes.
